# FASCICULE DE BREVET EUROPEEN

(11) **EP 2 788 588 B1**
(45) Date de publication et mention de la délivrance du brevet: **17.07.2019**
(21) Numéro de dépôt: 12810349.6
(22) Date de dépôt: 05.12.2012
(51) Int. Cl.: F01D 11/00, F01D 25/18, F02C 7/28, F16J 15/42

(54) **SYSTEME POUR ASSURER L'ETANCHEITE ENTRE UNE ENCEINTE D'HUILE ET UN VOLUME EXTERIEUR ATTENANT ET TURBOMACHINE EQUIPEE D'UN TEL SYSTEME D'ETANCHEITE**
VORRICHTUNG ZUM GEWÄHRLEISTEN DER DICHTIGKEIT ZWISCHEN EINER ÖLKAMMER UND EINEM BENACHBACHTEN EXTERNEN VOLUMEN SOWIE TURBOMASCHINE MIT SOLCHER VORRICHTUNG
SYSTEM FOR ENSURING THE TIGHTNESS BETWEEN A LUBRICANT CHAMBER AND A NEARBY EXTERNAL SPACE AND TURBOMACHINE WITH SUCH A SYSTEM

(30) Priorité: 08.12.2011 FR 1161330
(43) Date de publication de la demande: 15.10.2014
(73) Titulaire: Safran Aircraft Engines, 75015 Paris (FR)
(72) Inventeur: IGEL, Dominik, F-77550 Moissy-cramayel Cedex (FR); LEROUX, Delphine, F-77550 Moissy Cramayel Cedex (FR)
(74) Mandataire: Gevers & Orès
(86) Numéro de dépôt international: PCT/FR2012/052810
(87) Numéro de publication internationale: WO 2013/083917

(56) Documents cités:
- EP-A2- 2 071 131
- EP-A2- 2 305 956
- WO-A2-02/48525
- GB-A- 2 401 912
- US-A1- 2001 047 651
- US-A1- 2010 104 418

## Description

La présente invention concerne un système pour assurer l'étanchéité entre deux volumes soumis à des pressions différentes et situés autour d'une pièce rotative, ainsi qu'une turbomachine équipée d'un tel système d'étanchéité.

En particulier, la présente invention est particulièrement bien adaptée, quoique non exclusivement, aux problèmes d'étanchéité rencontrés dans une turbomachine, notamment un turbomoteur pour aéronef.

Un tel turbomoteur comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. A chaque compresseur peut correspondre une turbine, les deux étant reliés par une pièce, formant ainsi, par exemple, un corps haute pression et un corps basse pression.

Le turboréacteur présente des enceintes de paliers contenant des organes de type roulements et engrenages lubrifiés par de l'huile. L'huile, projetée par ces pièces en rotation, forme un brouillard de gouttelettes en suspension dans le volume correspondant des enceintes de paliers (désignées par la suite enceintes d'huile dans la mesure où elles contiennent une suspension de gouttelettes d'huile).

Les enceintes d'huile peuvent être formées et délimitées par des parois de la structure fixe du turboréacteur, mais aussi par des parois d'éléments tournants. Elles doivent retenir l'huile en leur sein et c'est pourquoi l'étanchéité entre les éléments fixes et les éléments tournants d'une enceinte d'huile est une problématique particulièrement délicate, puisqu'il s'agit de prévenir toute fuite d'huile dans les volumes annulaires extérieurs jouxtant lesdites enceintes d'huile.

Aussi, de façon connue, l'étanchéité d'une telle enceinte d'huile comprenant un ou plusieurs paliers, agencés entre le corps haute pression et le corps basse pression ou une pièce fixe du turbomoteur, peut être réalisée à l'aide d'un joint labyrinthe, d'un joint carbone annulaire ou de tout autre type de joint d'étanchéité. Un certain niveau de pression doit être assuré en amont du joint afin de créer un débit de gaz vers l'enceinte, ces gaz s'opposant à la sortie d'huile par ledit joint. Un tel agencement comportant une série de plusieurs joints à brosses comprise entre deux joints à labyrinthe est connu du document EP-2.305.958-A2. La différence de pression est définie de manière à être suffisante lors du régime de ralenti du turbomoteur, ce qui impose de prélever du gaz à des étages aval du compresseur basse pression ou du compresseur haute pression.

Cependant, le prélèvement de gaz à de tels étages aval soulève notamment les deux inconvénients suivants :
- la température élevée du gaz entraîne un vieillissement accéléré de l'huile de l'enceinte, ce qui ne peut être satisfaisant ; et
- le rendement du turbomoteur est sensiblement dégradé.

Les documents GB-2.401.912-A2 et US-2001/047651-A1 décrivent des dispositifs dans lequel de l'air prélevé sur le compresseur est injecté entre un joint à brosse et un joint labyrinthe qui assurent l'étanchéité entre un rotor et un stator. Cette solution technique pénalise le rendement du compresseur.

Le prélèvement d'air à partir du compresseur est généralement une solution pénalisante, qui est utilisée à de nombreuses fins dans les turbomachines, comme le montre le document WO-02/48525-A2 qui décrit un dispositif de refroidissement de turbomachine comportant un dispositif de prélèvement d'air à partir du compresseur vers un carter interne fixe, ce dispositif comportant un système d'étanchéité autour de l'interface entre le compresseur et le carter fixe. Le document EP-2.071.131-A2 décrit une autre utilisation d'air comprimé pour l'alimentation d'un moyen d'étanchéité à joints fluides.

Le document US2010/104418A1 divulgue une turbomachine de l'état de l'art selon le préambule de la revendication 1.

La présente invention a pour objet d'améliorer l'étanchéité entre une enceinte d'huile d'une turbomachine et le volume annulaire extérieur avoisinant, sans dégradation du rendement de la turbomachine, ni vieillissement prématuré de l'huile.

A cette fin, l'invention concerne une turbomachine selon la revendication 1.

Ainsi, grâce à l'invention, la chambre d'étanchéité définie entre les premier et second joints peut être alimentée en gaz qui, lors de la rotation du rotor, est comprimé sous l'effet de la force centrifuge s'exerçant sur celui-ci. Ainsi, la pression régnant dans la chambre d'étanchéité devient supérieure aux pressions siégeant respectivement dans l'enceinte d'huile et dans le volume extérieur attenant, ce qui empêche l'huile de l'enceinte de traverser l'un ou l'autre des deux joints pour aboutir dans le volume extérieur à l'enceinte. Autrement dit, l'étanchéité de l'enceinte d'huile est assurée, d'une part, par la présence d'une paire de joints d'étanchéité et, d'autre part, par la pressurisation du gaz demeurant dans la chambre d'étanchéité favorisant l'écoulement du gaz vers l'enceinte d'huile tout en prévenant l'entrée d'huile dans la chambre d'étanchéité. L'effet combiné de la paire de joints et de la pressurisation du gaz permet donc d'obtenir une étanchéité remarquable, même lors d'une rotation modérée du rotor (correspondant, par exemple, au régime de ralenti d'une turbomachine) et sans consommation supplémentaire d'huile (les pertes d'huile étant inexistante, ou quasiment inexistante).

Selon la présente invention, les moyens d'alimentation sont, au moins en partie, ménagés dans le rotor.

Selon l'invention, les moyens d'alimentation comprennent au moins un canal qui est pratiqué dans le rotor et qui débouche dans la chambre d'étanchéité.

En outre, au moins une portion dudit canal peut être inclinée par rapport à l'axe du rotor et/ou appartenir à un plan transversal à l'axe du rotor (dans lequel ladite portion peut être inclinée tangentiellement) pour que le gaz débouche dans la chambre d'étanchéité suivant une direction orthogonale audit axe rotor.

De façon avantageuse, lesdits moyens d'alimentation comprennent une pluralité de canaux, qui sont régulièrement répartis autour de l'axe du rotor et qui débouchent dans ladite chambre d'étanchéité, pour l'alimenter uniformément en gaz.

Par ailleurs, les premier et second joints, de préférence annulaires, peuvent être montés sur le rotor.

En outre, le gaz alimentant la chambre d'étanchéité dudit système est prélevé à un étage amont de la turbomachine (par exemple d'une soufflante, d'un compresseur basse pression, etc.) ou à l'extérieur de celle-ci.

Ainsi, la température du gaz injecté dans la chambre d'étanchéité reste faible, ce qui évite toute dégradation accélérée de l'huile présente dans l'enceinte d'huile lors de son contact avec le gaz.

De plus, le rotor de la turbomachine correspond de préférence à un corps associé à une turbine haute pression.

Par ailleurs, ladite pièce peut être :
- soit fixe et correspondre, dans ce cas, au stator de la turbomachine. Dans cette configuration, l'enceinte d'huile peut comprendre au moins un palier simple défini entre la pièce fixe (à savoir le stator) et le rotor (correspondant au corps associé à la turbine haute pression) ;
- soit mobile et correspondre, dans ce cas, à un corps associé à une turbine basse pression. Dans cette autre configuration, l'enceinte d'huile peut comporter au moins un palier inter-arbre qui est défini entre la pièce mobile (à savoir le corps associé à la turbine basse pression) et le rotor (correspondant au corps associé à la turbine haute pression).

L'unique figure du dessin annexé fera bien comprendre comment l'invention peut être réalisée. Sur cette figure, des références identiques désignent des éléments semblables.

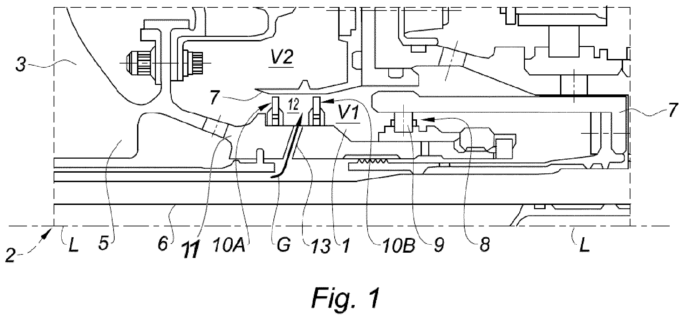

La figure 1 montre de façon schématique, dans une coupe axiale partielle, une enceinte d'huile d'un turbomoteur d'aéronef, dont l'étanchéité est assurée au moyen d'un système d'étanchéité conforme à la présente invention.

Sur la figure 1, on a représenté, de façon schématique, une enceinte d'huile 1 d'un turbomoteur d'aéronef 2 conforme à l'invention.

Le turbomoteur 2 comporte, de façon connue, une soufflante, un compresseur basse pression, un compresseur haute pression, une chambre de combustion, une turbine haute pression 3, une turbine basse pression et une tuyère d'échappement. Le compresseur haute pression et la turbine haute pression 3 sont liés l'un à l'autre par un tambour se prolongeant vers l'amont par une enveloppe et forment ensemble un corps haute pression 5. Le compresseur basse pression et la turbine basse pression sont reliés par un arbre basse pression 6 et forment avec lui un corps basse pression 7.

Le turboréacteur 2 comporte des organes statiques (ou fixes) et des organes tournants, formant les différents éléments fonctionnels ci-dessus, de manière connue. Il s'étend globalement suivant un axe L-L qui est l'axe de rotation de ses organes tournants et en particulier l'axe de l'arbre basse pression 6 et de l'enveloppe. Dans la suite de la description, les notions de longitudinal, radial, interne ou externe sont relatives à cet axe L-L.

En outre, le turboréacteur 2 présente des enceintes d'huile (ou de paliers), dont l'enceinte d'huile aval 1 illustrée sur la figure 1 qui comprend un palier 8 équipé de rouleaux de palier 9, pour assurer la liaison rotative entre le corps haute pression 5 et le corps basse pression 7.

Par la suite, l'invention va être décrite, à titre d'exemple illustratif, en relation avec l'enceinte d'huile 1, mais il va de soi qu'elle s'applique à toute autre enceinte contenant ou logeant des organes avec un brouillard d'huile pour leur lubrification.

L'enceinte d'huile 1 définit un volume annulaire intérieur V1 par des parois d'organes fixes et d'organes tournants. Elle est notamment délimitée, du côté interne, par une portion du corps haute pression 5 et, du côté externe, par une portion du corps basse pression 7 (partiellement représenté) solidaire de l'arbre basse pression 6.

En outre, un volume annulaire V2, agencé à l'extérieur de l'enceinte 1 du côté amont de celle-ci, est également défini par une portion du corps haute pression 5, du côté interne et amont, et par une portion du corps basse pression 7, du côté aval.

Selon l'invention, comme le montre la figure 1, pour assurer l'étanchéité à l'huile entre les deux volumes annulaires V1 et V2 et éviter que de l'huile (permettant la lubrification des paliers) ne vienne au contact des pièces chaudes, le turbomoteur 2 comprend deux joints carbone annulaires 10A et 10B qui sont montés sur le tourillon 11 du corps haute pression 5 pour être disposés entre ce dernier et le corps basse pression 7. Les joints 10A et 10B sont espacés longitudinalement l'un de l'autre d'une distance de séparation prédéfinie.

Bien entendu, en variante, la paire de joints pourrait comporter des joints labyrinthes, des joints à brosse ou bien encore tout autre type de joint approprié permettant d'assurer une étanchéité entre les deux volumes annulaires.

Ainsi, le volume annulaire délimité par le tourillon 11, le corps basse pression 7 et la paire de joints 10A et 10B forme une chambre d'étanchéité 12.

En outre, dans l'exemple, des canaux 13 sont ménagés dans l'épaisseur du tourillon 11 et sont alimentés par du gaz circulant, depuis la source de prélèvement, entre le fourreau et l'arbre basse pression 6. Les canaux 13 débouchent dans la chambre d'étanchéité 12, afin de pouvoir l'alimenter en gaz (le gaz étant symbolisé par la flèche G sur la figure 1).

La taille et le nombre des canaux 13 sont adaptés en fonction de l'étanchéité désirée et de la taille du turbomoteur 2.

Selon l'invention, les canaux 13 sont à section transversale circulaire, leur diamètre est compris entre 3 mm et 10 mm, pour un nombre de canaux 13 compris entre 10 et 40.

Le gaz G introduit, par les canaux 13, dans la chambre d'étanchéité 12 peut ainsi être prélevé en sortie de la soufflante ou du compresseur basse pression du turbomoteur 2 ou bien encore à l'extérieur du turbomoteur 2 (le gaz prélevé est dans ce dernier cas de l'air ambiant), la température du gaz G limitant un vieillissement anticipé de l'huile.

De préférence, les canaux d'alimentation 13 sont régulièrement répartis, autour de l'axe longitudinal L-L, le long de la circonférence du tourillon 11. Il va de soi que l'on pourrait envisager tout autre agencement des canaux d'alimentation, par exemple sur deux circonférences parallèles du tourillon 11.

Dans l'exemple de la figure 1, la portion aval des canaux d'alimentation 13, ménagée dans le tourillon 11, est inclinée vers l'aval par rapport à l'axe L-L du turbomoteur 2. Bien entendu, on pourrait envisager que la portion aval desdits canaux soit orthogonale à l'axe longitudinal L-L.

Ainsi, la chambre d'étanchéité 12 peut recevoir, lors du fonctionnement du turbomoteur 2, du gaz G provenant de la soufflante (ou du compresseur basse pression). La rotation du corps haute pression 6 va entraîner une compression du gaz G demeurant dans la chambre d'étanchéité 12, sous l'effet de la force centrifuge s'exerçant sur le gaz G.

De cette façon, la pression au sein de la chambre 12 devient supérieure aux pressions à l'intérieur de l'enceinte d'huile 1 et du volume extérieur V2, empêchant ainsi l'huile de l'enceinte 1 de traverser l'un ou l'autre des deux joints 10A et 10B pour aboutir dans le volume extérieur V2.

En d'autres termes, la paire de joints 10A et 10B et la surpression demeurant dans la chambre d'étanchéité 12 provoquent un écoulement de gaz G de celle-ci vers l'enceinte d'huile 1 et le volume extérieur V2, tout en bloquant l'entrée d'huile dans ladite chambre 12 et, a fortiori, dans le volume V2. Une telle étanchéité est garantie même pour des régimes de fonctionnement faibles (tels que le régime de ralenti), sans consommation additionnelle d'huile.

## Revendications

1. Turbomachine, notamment un turbomoteur d'aéronef, comprenant au moins une enceinte d'huile (1) et un volume extérieur attenant (V2) délimités par un rotor mobile (5) en rotation autour d'un axe (L-L) et une pièce, fixe ou mobile (7), comprenant au moins un système (10A, 10B, 12, 13) apte à assurer l'étanchéité entre l'enceinte d'huile (1) et le volume extérieur attenant (V2 ledit système comprenant :d
- un premier joint (10A) agencé entre le rotor (5) et la pièce (7),
- un second joint (10B) qui est monté entre le rotor (5) et la pièce (7) et qui est décalé longitudinalement par rapport au premier joint (10A), de manière à former avec le premier joint une chambre d'étanchéité (12) délimitée par le rotor (5), la pièce (7) et les deux joints (10A, 10B) ; et
- des moyens (13) pour alimenter en gaz (G) la chambre d'étanchéité (12), configurés pour que le gaz (G) puisse être comprimé sous l'effet de la force centrifuge s'exerçant sur celui-ci par la mise en rotation du rotor (5), la chambre communiquant avec l'enceinte d'huile et le volume extérieur attenant à travers les premier et second joints respectivement,
lesdit moyens d'alimentation (13) étant ménagés dans le rotor (5) et comprenant des canaux (13) qui sont pratiqués dans le rotor (5), qui débouchent dans la chambre d'étanchéité (12), et qui sont aptes lors de la rotation dudit rotor (5) à entraîner une compression du gaz (G) demeurant dans la chambre d'étanchéité (12) ; sous l'effet de la force centrifuge s'exerçant sur le gaz (G) dans ledit canal (13),
**caractérisée en ce que** les canaux (13) sont à section transversale circulaire et **en ce que** leur diamètre est compris entre 3 mm et 10 mm, pour un nombre de canaux (13) compris entre 10 et 40.

2. Turbomachine selon la revendication précédente, dans laquelle au moins une portion dudit canal (13) est inclinée longitudinalement par rapport à l'axe (L-L) du rotor (5) et/ou appartient à un plan transversal à l'axe (L-L) dudit rotor (5) dans lequel ladite portion est inclinée tangentiellement.

3. Turbomachine selon la revendication 1 ou 2, dans laquelle lesdits moyens d'alimentation comprennent une pluralité de tels canaux (13), qui sont régulièrement répartis autour de l'axe (L-L) du rotor (5) et qui débouchent dans ladite chambre d'étanchéité (12).

4. Turbomachine selon l'une des revendications précédentes, dans laquelle les premier et second joints (10A, 10B), de préférence annulaires, sont montés sur le rotor (5).

5. Turbomachine selon l'une des revendications précédentes, dans laquelle le gaz (G) alimentant la chambre d'étanchéité (12) est prélevé à un étage amont de la turbomachine ou à l'extérieur de celle-ci.

6. Turbomachine selon l'une des revendications précédentes, dans laquelle ladite pièce est fixe et correspond au stator de la turbomachine (2).

7. Turbomachine selon l'une des revendications précédentes, dans laquelle ladite pièce est mobile et correspond à un corps (7) associé à une turbine basse pression.

## Patentansprüche

1. Turbomaschine, insbesondere ein Turbotriebwerk eines Luftfahrzeugs, mindestens einen Ölbehälter (1) und ein benachbartes äußeres Volumen (V2) umfassend, die durch einen drehbeweglichen Rotor (5) um eine Achse (L-L) und ein Teil, das feststehend oder beweglich (7) ist, eingegrenzt sind, mindestens ein System (10A, 10B, 12, 13) umfassend, das in der Lage ist, die Dichtigkeit zwischen dem Ölbehälter (1) und dem externen Volumen (V2 zu gewährleisten, wobei das System umfasst:
- eine erste Dichtung (10A), die zwischen dem Rotor (5) und dem Teil (7) angeordnet ist,
- eine zweite Dichtung (10B), die zwischen dem Rotor (5) und dem Teil (7) montiert ist, und die in Längsrichtung in Bezug auf die erste Dichtung (10A) versetzt ist, um mit der ersten Dichtung eine Dichtigkeitskammer (12) zu bilden, die durch den Rotor (5), das Teil (7) und die beiden Dichtungen (10A, 10B) eingegrenzt wird; und
- Mittel (13) zur Gasversorgung (G) der Dichtigkeitskammer (12), konfiguriert, damit das Gas (G) unter der Wirkung der Zentrifugalkraft, die durch das In-Drehung-Versetzen des Rotors (5) auf dieses ausgeübt wird, komprimiert werden kann, wobei die Kammer jeweils durch die erste und zweite Dichtung mit dem Ölbehälter und dem benachbarten äußeren Volumen kommuniziert,
wobei die Versorgungsmittel (13) in dem Rotor (5) ausgeführt sind und Kanäle (13) umfassen, die in dem Rotor (5) ausgebildet sind, die in die Dichtigkeitskammer (12) münden, und die bei der Drehung des Rotors (5) in der Lage sind, ein Komprimieren des Gases (G) anzuregen, das in der Dichtigkeitskammer (12) verbleibt; unter der Wirkung der Zentrifugalkraft, die auf das Gas (G) in dem Kanal (13) ausgeübt wird,
**dadurch gekennzeichnet, dass** die Kanäle (13) mit einem kreisförmigen Querschnitt sind, und dadurch, dass ihr Durchmesser zwischen 3 mm und 10 mm beträgt, für eine Anzahl an Kanälen (13), die zwischen 10 und 40 beträgt.

2. Turbomaschine nach dem vorstehenden Anspruch, wobei mindestens ein Abschnitt des Kanals (13) in Längsrichtung in Bezug auf die Achse (L-L) des Rotors (5) geneigt ist und/oder einer zur Achse (L-L) des Rotors (5) querlaufenden Ebene angehört, auf welcher der Abschnitt tangential geneigt ist.

3. Turbomaschine nach Anspruch 1 oder 2, wobei die Versorgungsmittel eine Vielzahl solcher Kanäle (13) umfassen, die regelmäßig um die Achse (L-L) des Rotors (5) herum verteilt sind, und die in die Dichtigkeitskammer (12) münden.

4. Turbomaschine nach einem der vorstehenden Ansprüche, wobei die erste und zweite Dichtung (10A, 10B), die vorzugsweise kreisförmig sind, auf dem Rotor (5) montiert sind.

5. Turbomaschine nach einem der vorstehenden Ansprüche, wobei das Gas (G), das die Dichtigkeitskammer (12) versorgt, auf einer Stufe stromaufwärts der Turbomaschine oder außerhalb derselben entnommen wird.

6. Turbomaschine nach einem der vorstehenden Ansprüche, wobei das Teil feststehend ist und dem Stator der Turbomaschine (2) entspricht.

7. Turbomaschine nach einem der vorstehenden Ansprüche, wobei das Teil beweglich ist und einem Körper (7) entspricht, der einer Niederdruckturbine zugeordnet ist.

## Claims

1. Turbine engine, in particular an aircraft turboshaft engine, comprising at least one oil chamber (1) and an adjoining outer volume (V2) delimited by a rotor (5) rotatably mobile about an axis (L-L) and a fixed or mobile part (7), comprising at least one system (10A, 10B, 12, 13) able to provide a seal between the oil chamber (1) and the adjoining outer volume (V2), said system comprising:
- a first seal (10A) arranged between the rotor (5) and the part (7),
- a second seal (10B) which is mounted between the rotor (5) and the part (7) and which is longitudinally offset with respect to the first seal (10A), so as to form with the first seal a sealing chamber (12) delimited by the rotor (5), the part (7) and the two seals (10A, 10B); and
- means (13) for supplying gas (G) to the sealing chamber (12), configured such that the gas (G) can be compressed under the effect of the centrifugal force exerted on the latter by putting the rotor (5) into rotation, the chamber communicating with the oil chamber and the adjoining outer volume through the first and second seals respectively,
said supply means (13) being arranged in the rotor (5) and comprising channels (13) which are arranged in the rotor (5), which open into the sealing chamber (12), and which are able during the rotation of said rotor (5) to drive a compression of the gas (G) remaining in the sealing chamber (12); under the effect of the centrifugal force exerted on the gas (G) in said channel (13),
**characterised in that** the channels (13) have a circular cross-section and **in that** their diameter is between 3mm and 10mm, for a number of channels (13) between 10 and 40.

2. Turbine engine according to the preceding claim, wherein at least one portion of said channel (13) is longitudinally inclined with respect to the axis (L-L) of the rotor (5) and/or belongs to a plane transverse to the axis (L-L) of said rotor (5) wherein said portion is tangentially inclined.

3. Turbine engine according to claim 1 or 2, wherein said supply means comprise a plurality of such channels (13), which are regularly distributed about the axis (L- L) of the rotor (5) and which open into said sealing chamber (12).

4. Turbine engine according to any one of the preceding claims, wherein the first and second seals (10A, 10B), which are preferably annular, are mounted on the rotor (5).

5. Turbine engine according to any one of the preceding claims, wherein the gas (G) supplying the sealing chamber (12) is taken from an upstream stage of the turbine engine or from outside of it.

6. Turbine engine according to any one of the preceding claims, wherein said part is fixed and corresponds to the stator of the turbine engine (2).

7. Turbine engine according to any one of the preceding claims, wherein said part is mobile and corresponds to a body (7) associated with a low-pressure turbine.
